# EUROPÄISCHE PATENTSCHRIFT

(11) **EP 1 180 504 B1**
(45) Veröffentlichungstag und Bekanntmachung des Hinweises auf die Patenterteilung: **15.10.2003**
(21) Anmeldenummer: 01118395.1
(22) Anmeldetag: 28.07.2001
(51) Int. Cl.: C04B 22/04, C04B 18/14

(54) **Porosierender, erstarrungsbeschleunigender Bindemittelbaustoff-Zusatz und Verfahren zu seiner Herstellung**
Pore forming and set accelerating building material additive and process for making the same
Agent porogène et accélérateur de prise pour matériau de construction et procédé pour sa fabrication

(30) Priorität: 15.08.2000 DE 10040582
(43) Veröffentlichungstag der Anmeldung: 20.02.2002
(73) Patentinhaber: Aluminium-Salzschlacke Aufbereitungs GmbH, 44536 Lünen (DE)
(72) Erfinder: Feige, Reinhard, Dipl.-Ing., 58332 Schwelm (DE); Merker, Gerhard, Dipl.-Ing., 58239 Schwerte (DE)
(74) Vertreter: Müller-Wolff, Thomas, Dipl.-Ing.

(56) Entgegenhaltungen:
- EP-A- 0 537 635
- AT-B- 331 173
- DE-A- 2 203 958
- DE-A- 19 644 654

## Beschreibung

Die Erfindung betrifft einen porosierenden, erstarrungsbeschleunigenden Bindemittelbaustoff-Zusatz, bestehend aus

| | |
|---|---|
| Al₂O₃ | 50 - 90 % |
| MgO | 4 - 20 % |
| SiO₂ | 0,5 - 15 % |
| AlN | 0,1 - 5 % |
| Fe₂O₃ | 0,1 - 5 % |
| CaO | 0,1 - 5 % |
| F | 0,1 - 5 % |
| Na₂O | 0,1 - 5 % |
| K₂O | 0,1 - 2 % |

sowie als metallische Teilchen

| | |
|---|---|
| Al | 0,1 - 10 % |
| Si | 0,1 - 3 % |
| Fe | 0,1 - 3 % |

Rest zusammen bis 5 %

| | |
|---|---|
| Glühverlust | 0,1 - 15 % |

und mindestens einem mineralischen Hauptbestandteil in Form von Korund (α-Al₂O₃) und Spinell (MgO x Al₂O₃). Die Erfindung betrifft ferner ein Verfahren zur Herstellung des Bindemittelbaustoff-Zusatzes.

Aus der DE 196 44 654 A1 ist eine aufbereitete Salzschlacke der folgenden Zusammensetzung (in Gew.-%) bekannt:

| | |
|---|---|
| Al₂O₃ = | 65,7 % |
| SiO₂ = | 7,9 % |
| Fe₂O₃ = | 1,5 % |
| CaO = | 3,2 % |
| MgO = | 10,1 % |
| TiO₂ = | 0,9 % |
| MnO = | 0,3 % |
| Na₂O = | 0,8 % |
| K₂O = | 0,4 % |
| SO₃ = | 0,5 % |
| F = | 1,2 % |
| P₂O₅ = | 0,1 % |
| H₂O = | 7,3 % |

Ein derartiges Pulver mit den kristallinen Phasen Korund α-Al₂O₃, Bayerit Al(OH)₃, Spinell MgAl₂O₄, und α-Quarz SiO₂ wird zusammen mit Kalksteinmehl bei 1150-1300°C zu Sulfoaluminatklinker verarbeitet. Ein ähnliches Verfahren zur Herstellung von Aluminatzementklinker ist aus DE 43 45 368 C2 bekannt.

Für bestimmte Anwendungen werden poröse anorganische Bindemittel-Baustoffe verlangt, die durch folgende Zusätze hergestellt werden:
a) natürliche oder synthetische poröse Füllstoffe, z.B. Bims, Perlit, Blähton, Kunststoffschaumgranulat,
b) organische Schäumer, wie z.B. Tenside oder Proteine,
c) gasbildende Stoffe, z.B. Aluminiumpulver.

Zur Herstellung von Gasbeton wird die Reaktion von Aluminiumpulver mit Kalk (Kalziumhydroxid) genutzt, die zur Bildung von Wasserstoffgas führt, wodurch die härtende Mischung aus Sand, Zement, Kalk und Wasser aufschäumt. Aluminiumpulver wird durch Feinvermahlung von Aluminium-Metall hergestellt, wobei jedoch Explosionsgefahr besteht.

Aus der DE 43 19 163 ist ein spinellhaltiger, zementgebundener Feststoff bekannt, der einen hochtonerdehaltigen Füllstoff enthält. Eine porosierende Wirkung dieses Füllstoffes ist nicht erkennbar.

Aus der EP 537635 ist ein porosierender zusatz für keramisches Material bekannt, der aus Abfallprodukten der Aluminiumherstellung hergestellt wurde.

Für das Erstarrungsverhalten werden Zusätze wie Calciumchlorid, Natriumcarbonat, Calciumaluminat eingesetzt, die die Erstarrung beschleunigen können. Andere Zusätze für eine Verzögerung des Erstarrungsverhaltens sind ebenfalls bekannt.

Aufgabe der vorliegenden Erfindung ist es, einen hochtonerdehaltigen Bindemittel-Baustoff-Zusatz bzw. ein entsprechendes Pulver herzustellen und in seiner Struktur und Zusammensetzung derart auszubilden, daß der Zusatz bzw. das Pulver als porosierend oder beschleunigend in anorganischen Bindemittelbaustoffen, wie Leichtmörtel, Porenbeton, Isolierschaum und Dämmstoffen, wirkt.

Diese Aufgabe wird erfindungsgemäß durch die in den Patentansprüchen 1 und 6 angegebenen Merkmale gelöst.

Überraschenderweise wurde festgestellt, daß ein hochtonerdehaltiges Pulver, das aus dem hochtonerdehaltigen Reststoff der Aufbereitung insbesondere der Naßaufarbeitung von Aluminium-Schlacken gewonnen werden kann, als porosierender Zusatzstoff für anorganische Bindemittel-Baustoffe einsetzbar ist, wenn das im Pulver enthaltene metallische Aluminium durch thermische Behandlung (Trocknung und Teilkalzination) aktiviert wird. Dabei läßt sich die Porenbildung durch den Grad der thermischen Aktivierung steuern. Dieser Zusatzstoff hat zudem den Vorteil, daß das Pulver gleichzeitig als Magermittel und Volumenbildner wirkt. Vorteilhaft ist außerdem, daß der Umgang mit explosivem Aluminiumpulver als Volumenbildner vermieden werden kann.

Das erfindungsgemäße aktivierte porosierende und hochtonerdehaltige Pulver ist dadurch gekennzeichnet, daß es
a) als chemische Bestandteile

| | |
|---|---|
| Al2O3 | 50 - 90 % |
| MgO | 4 - 20 % |
| SiO2 | 0,5 - 15 % |
| AlN | 0,1 - 5 % |
| Fe2O3 | 0,1 - 5 % |
| CaO | 0,1 - 5 % |
| F | 0,1 - 5 % |
| Na2O | 0,1 - 5 % |
| K20 | 0,1 - 2 % |

sowie als metallische Teilchen

| | |
|---|---|
| Al | 0,1 - 10 % |
| Si | 0,1 - 3 % |
| Fe | 0,1 - 3 % |

Rest zusammen max. 5 %

| | |
|---|---|
| Glühverlust | 0,1 - 15 %, |

b) als mineralische Hauptbestandteile Korund (α-Al₂O₃), Spinell (MgO x Al₂O₃) und Übergangsmodifikationen von Aluminiumhydroxid (Al₂O₃ x 3H₂O) zu α-Aluminiumoxid, und als Nebenbestandteil Aluminiummetall,
c) eine Teilchengröße von mindestens 90 % kleiner 500 µm, und
d) eine spezifische BET-Oberfläche von mindestens 10 m²/g aufweist.

Das aktivierte porosierende und hochtonerdehaltige Pulver kann dadurch gewonnen werden, daß tonerdehaltige Reststoffe aus der nassen Aufarbeitung von Aluminium-Salzschlacke bei Temperaturen bis zu 1.000°C getrocknet und teilkalziniert werden. Teilkalzination bedeutet, daß einerseits die Stufe der thermischen Entfernung allein der physikalischen Restfeuchte bereits überschritten ist, andererseits noch Anteile an thermisch verdampfbaren Stoffen vorhanden sind, wie Fluor aus Calciumfluorid und Kristallwasser aus Aluminiumhydroxid-Aluminiumoxid-Übergangsmodifikationen, sowie metallisches Aluminium.

Wesentlich ist die Trocknung und Teilkalzination des tonerdehaltigen Reststoffes mittels Apparaten, die einen schnellen Wärmeübergang auf das Produkt gestatten. Vorzugweise werden Stromtrockner, Zyklon- oder Wirbelschichtkalzinatoren eingesetzt. In einem Drehrohrofen erfolgt der Wärmeübergang wesentlich langsamer und ungleichmäßiger, so daß der Erfolg der "Aktivierung" geringer ist. Außerdem bilden sich im Drehofen Agglomerate, die erst durch Zerkleinerung wieder beseitigt werden müssen. Die nachfolgenden Beispiele verdeutlichen den Gegenstand der Erfindung.

### Vergleichsbeispiel 1 (Stand der Technik)

Gemäß DE 43 19 163 wurde ein nicht aktivierter hochtonerdehaltiger Reststoff (Bezeichnung: SEROX) aus der Aufarbeitung von Aluminium-Salzschlacke mit einem Gehalt an Aluminiumoxid von 64 %, den mineralogischen Hauptkomponenten: Korund (α-Al₂O₃) und Spinell (MgO x Al₂O₃), sowie Aluminiumhydroxid (Al₂O₃ x 3H₂O), einem Aluminium-Metallgehalt von 3 %, einem Glühverlust von 11 %, einer Feuchte von 25 % und einer Teilchengröße von 90 % kleiner 500 µm mit Tonerdezement (Secar 51) im Gewichtsverhältnis 1 : 1 (bezogen auf getrocknete Substanz) gemischt. Für die Einstellung der Verarbeitbarkeit des Mörtels war ein Anmachwasserbedarf von 45 Gew.-% erforderlich. Der Erstarrungsbeginn trat nach etwa 3 Stunden ein. Eine Porosierung wurde nicht festgestellt.

### Beispiel 2

Ein tonerdehaltiges Pulver nach Anspruch 1 wurde mittels eines gasbeheizten Stromtrockners (Rauchgastemperatur ca. 450°C, Ablufttemperatur ca. 150°C, Verweilzeit weniger als 10 Sekunden) getrocknet und thermisch teilaktiviert. Das Pulver (Bezeichnung: SEROX T) hatte eine Restfeuchte von 0,8 %, einen Glühverlust von 10 %, einen Gehalt an metallischem Aluminium von 3 %, Übergangsmodifikationen von Aluminiumhydroxid (Al₂O₃ x 3H₂O) zu α-Aluminiumoxid in Form von AlOOH (Böhmit) und eine spezifische BET-Oberfläche von 27 m²/g.

### Beispiel 3

Das teilaktivierte Pulver nach Beispiel 2 wurde mittels eines gasbeheizten Hochtemperatur-Mischzyklons bei Rauchgastemperaturen von 600, 750, 900 und 1200°C und Verweilzeiten von weniger als 1 Sekunde zu folgenden Produkten kalziniert:

| Produkt | Temperatur | BET-Oberfläche | Porenverteilung | Al-Metall |
|---|---|---|---|---|
| | [°C] | [m²/g] | [nm] | [%] |
| SEROX TK600 | 600 | 36 | 20 - 200 | 3 |
| SEROX TK750 | 750 | 45 | 20 - 200 | 3 |
| SEROX TK900 | 900 | 26 | 20 - 200 | 2,5 |
| SEROX TK1200 | 1200 | 5 | - | 1 |

Man erkennt, daß die Vollaktivierung bei 600° mit einer BET-Oberfläche von 36 m²/g einsetzt und bis 900° reicht. Danach beginnt eine Deaktivierung, erkennbar an der niedrigen BET-Oberfläche. Die ermittelten Glühverluste betrugen jeweils kleiner 2 Gew.-% Es lagen Übergangsmodifikationen von Aluminiumhydroxid (Al₂O₃.3H₂O) zu α-Aluminiumoxid in Form von Übergangstonerden (sogenanntem "Gamma-Al₂O₃) vor, deren Anteil mit steigender Temperatur abnahm. Auch bei 1200°C war die Umwandlung in die Alpha-Form noch nicht vollständig.

### Beispiel 4

Tonerdehaltiger Reststoff nach Beispiel 1 wurde mittels eines gasbeheizten Drehrohrofens bei Produkttemperaturen von 800, 1000, 1200 und 1400°C und einer Verweilzeit von 60 Minuten kalziniert. Mit steigender Temperatur traten zunehmend Agglomerate bis zu mehreren cm Größe auf. Nach der Kalzination ergaben sich folgende Eigenschaften:

| Produkt | Temperatur [°C] | BET-Oberfläche [m²/g] | Al-Metall [%] |
|---|---|---|---|
| SEROX K800 | 800 | 30 | 3 |
| SEROX K1000 | 1000 | 8 | 1,5 |
| SEROX K1200 | 1200 | 2 | 0,5 |
| SEROX K1400 | 1400 | 0,2 | <0,5 |

Die ermittelten Glühverluste betrugen jeweils kleiner 2 Gew.-%. Bis zu 1200°C lagen noch Übergangsmodifikationen von Aluminiumhydroxid (Al₂O₃.3H₂O) zu α-Aluminiumoxid in Form von Übergangstonerden (sogenanntem "Gamma-Al₂O₃") vor, deren Anteil mit steigender Temperatur abnahm. Bei 1400°C waren die Umwandlung in die Alpha-Form und die Oxidation des Al-Metalls praktisch vollständig.

### Beispiel 5

SEROX T (nach Beispiel 2), SEROX TK750 (nach Beispiel 3), Kalk, Zement, Wasserglas und Wasser wurden bei Raumtemperatur abgewogen, in einen Kunststoffbecher gegeben und durch kurzes Umrühren (ca. 1 min) mittels eines Löffels zu einem Brei vermischt. Nach wenigen Minuten trat eine Gasentwicklung im Brei ein, die zu einer Schaumbildung und Volumenzunahme führte, verbunden mit einer erheblichen Erwärmung und einer schnellen Erhärtung der Masse. Als Ergebnisse wurden die Volumenzunahme (gemessen über die Höhe der aufgeschäumten Masse), die Reaktionstemperatur (gemessen mittels Thermometer in der Masse), die Reaktionszeit und die Rohdichte der Masse (gemessen aus Gewicht und Volumen der Masse) festgehalten. Wie aus der nachstehenden Tabelle folgt, gelingt es durch die thermische Aktivierung des hochtonerdehaltigen Pulvers das in ihm enthaltene metallische Aluminium als gasbildende, porosierende Substanz für anorganische Bindemittelbaustoffe zu nutzen. Die erreichten Volumenzunahmen betragen bis zu etwa 500 %. Die Verfestigung zu einem mechanisch stabilen Körper erfolgte überwiegend bereits nach Reaktionszeiten von 5 bis 10 Minuten.

Es ist ableitbar, daß sich die Volumenzunahmen und die Reaktionszeiten durch Kombination unterschiedlicher Aktivierungszustände des hochtonerdehaltigen Pulvers steuern lassen. Das aktivierte hochtonerdehaltige Pulver hat die Vorteile, daß es gleichzeitig als anorganische steinbildende Komponente, Magermittel, und Volumenbildner wirkt, und der Umgang mit explosivem Aluminiumpulver vermieden wird.

Ferner erkennt man, dass die Erstarrung von mehreren Stunden gemäß Beispiel 1 auf wenige Minuten (Beispiel 5) beschleunigt wurde.

| Mischung | 1 | 2 | 3 | 4 | 5 | 6 | 7 | 8 |
|---|---|---|---|---|---|---|---|---|
| Einwaage [g] | | | | | | | | |
| SEROX T | 450 | | - | 250 | - | - | - | - |
| SEROX TK750 | - | 450 | 450 | - | 250 | 450 | 375 | 250 |
| Weißfeinkalk | 35 | 35 | 70 | - | - | - | - | - |
| Portlandzement CEM II | - | - | - | 250 | 250 | - | 125 | - |
| Tonerdezement Fondu | - | - | - | - | - | - | - | 250 |
| Wasserglas | - | - | - | 200 | 200 | 400 | 200 | 200 |
| Natronlauge 50%ig | - | - | - | 100 | 100 | - | 100 | 100 |
| Wasser | 225 | 250 | 330 | - | - | - | 50 | - |
| Volumenzunahme [%] | - | 70 | 150 | 140 | 350 | 350 | 490 | 350 |
| Reaktionstemperatur[°C] | 24 | 43 | 69 | 24 | 40 | 76 | 68 | 48 |
| Reaktionszeit [min] | 5 | 3 | 5 | 20 | 10 | 10 | 8 | 6 |
| Rohdichte [g/cm³] | 1,93 | 1,35 | 0,74 | 1,51 | 0,60 | 0,63 | 0,43 | 0,60 |

## Patentansprüche

1. Porosierender, erstarrungsbeschleunigender Bindemittelbaustoff-Zusatz, bestehend aus
| | |
|---|---|
| Al₂O₃ | 50 - 90 % |
| MgO | 4 - 20 % |
| SiO₂ | 0,5 - 15 % |
| AlN | 0,1 - 5 % |
| Fe₂O₃ | 0,1 - 5 % |
| CaO | 0,1 - 5 % |
| F | 0,1 - 5 % |
| Na₂O | 0,1 - 5 % |
| K₂O | 0,1 - 2 % |
sowie als metallische Teilchen
| | |
|---|---|
| Al | 0,1 - 10 % |
| Si | 0,1 - 3 % |
| Fe | 0,1 - 3 % |
Rest zusammen bis 5 %
| | |
|---|---|
| Glühverlust | 0,1 - 15 % |
und aus mineralischen Hauptbestandteilen in Form von Korund (α-Al₂O₃) und Spinell (MgO x Al₂O₃),
wobei die metallischen Aluminium-Teilchen von mineralischen Übergangsmodifikationen von Aluminiumhydroxid (Al₂O₃ x 3H₂O) zu α-Aluminiumoxid umhüllt sind,
wobei das Pulver eine Teilchengröße von mindestens 90% kleiner 500 µm aufweist und
die BET-Oberfläche des Pulvers mindestens 10 m²/g beträgt.

2. Porosierender, erstarrungsbeschleunigender Bindemittelbaustoff-Zusatz nach Anspruch 1,
**dadurch gekennzeichnet,**
**daß** die Umhüllung aus den mineralischen Übergangsmodifikationen eine Permeabilität für Gase und wässrige Flüssigkeiten aufweist.

3. Porosierender, erstarrungsbeschleunigender Bindemittelbaustoff-Zusatz nach einem der vorhergehenden Ansprüche,
**dadurch gekennzeichnet,**
**daß** die Umhüllung aus den mineralischen Übergangsmodifikationen eine Porenverteilung im Bereich von 2 bis 200 Nanometer aufweist.

4. Porosierender, erstarrungsbeschleunigender Bindemittelbaustoff-Zusatz nach einem der vorhergehenden Ansprüche, **gekennzeichnet durch** eine spezifische BET-Oberfläche von 10 - 50 m²/g.

5. Porosierender, erstarrungsbeschleunigender Bindemittelbaustoff-Zusatz nach einem der vorhergehenden Ansprüche, **gekennzeichnet durch** eine Teilchengröße von mindestens 90 % kleiner 200 µm.

6. Verfahren zur Herstellung eines porosierenden, erstarrungsbeschleunigenden Bindemittelbaustoff-Zusatzes,
**dadurch gekennzeichnet,**
**dass** ein hochtonerdehaltiges Material mit der Zusammensetzung
| | |
|---|---|
| Al₂O₃ | 50 - 90 % |
| MgO | 4 - 20 % |
| SiO₂ | 0,5 - 15 % |
| AlN | 0,1 - 5 % |
| Fe₂O₃ | 0,1 - 5 % |
| CaO | 0,1 - 5 % |
| F | 0,1 - 5 % |
| Na₂O | 0,1 - 5 % |
| K₂O | 0,1 - 2 % |
sowie als metallische Teilchen
| | |
|---|---|
| Al | 0,1 - 10 % |
| Si | 0,1 - 3 % |
| Fe | 0,1 - 3 % |
Rest zusammen max. 5 %
| | |
|---|---|
| Glühverlust | 5 - 15 % |
| Feuchte | 20 - 40 % |
mineralische Hauptbestandteile in Form von Korund (α-Al₂O₃) und Spinell (MgO x Al₂O₃) sowie Aluminiumhydroxid auf eine Teilchengröße von mindestens 90 % kleiner 500µm mechanisch zerkleinert wird,
**daß** eine thermische Behandlung des Pulvers in einem Rauchgasstrom auf eine Restfeuchte von maximal 2 % durch Schocktrocknung bei Rauchgastemperaturen von 400 bis 500 °C mit einer Trocknungszeit von weniger als 10 Sekunden durchgeführt wird,
und **daß** eine thermische Aktivierung durch Teilkalzination des Pulvers im Temperaturbereich zwischen 400 und 1.000 °C erfolgt, wobei die Haltezeit danach bemessen wird, daß eine BET-Oberfläche des aktivierten Pulvers von mindestens 10 m²/g erhalten wird und wobei die metallischen Aluminium-Teilchen von mineralischen Übergangsmodifikationen von Aluminiumhydroxid (Al₂O₃ x 3H₂O) zu α-Aluminiumoxid umhüllt sind.

7. Verfahren nach Anspruch 6,
**dadurch gekennzeichnet,**
**daß** das porosierende Pulver durch eine Teilkalzination bei mindestens 600 °C und maximal 900 °C aktiviert wird.

## Claims

1. A porosifying, solidification-accelerating additive for binding agent building materials, consisting of
| | |
|---|---|
| Al₂O₃ | 50 - 90 % |
| MgO | 4 - 20 % |
| SiO₂ | 0.5 - 15 % |
| AlN | 0.1 - 5 % |
| Fe₂O₃ | 0.1 - 5 % |
| CaO | 0.1 - 5 % |
| F | 0.1 - 5 % |
| Na₂O | 0.1 - 5 % |
| K₂O | 0.1 - 2 % |
as well as in the form of metallic particles
| | |
|---|---|
| Al | 0.1 - 10 % |
| Si | 0.1 - 3 % |
| Fe | 0.1 - 3 % |
balance in total up to 5 %
| | |
|---|---|
| annealing losses | 0.1 - 15 % |
and of mineral main constituents in the form of corumdum (α-Al₂O₃) and spinel (MgO x Al₂O₃),
wherein the metallic aluminium particles are enveloped by mineral transition modifications from aluminium hydroxide (Al₂O₃ x 3H₂O) to α-aluminium oxide,
wherein the powder comprises a particle size of at least 90% smaller than 500 µm and wherein the BET surface of the powder amounts to at least 10 m²/g.

2. A porosifying, solidification-accelerating additive for binding agent building materials, according to claim 1,
**characterised in**
**that** the sheathing from the mineral transition modifications comprises a permeability for gases and aqueous fluids.

3. A porosifying, solidification-accelerating additive for binding agent building materials, according to any one of the preceding claims,
**characterised in**
**that** the sheathing from the mineral transition modifications comprises a pore distribution within the range of 2 to 200 nanometer.

4. A porosifying, solidification-accelerating additive for binding agent building materials, according to any one of the preceding claims, **characterised by** a specific BET surface of 10 - 50 m²/g.

5. A porosifying, solidification-accelerating additive for binding agent building materials, according to any one of the preceding claims, **characterised by** a particle size of at least 90 % smaller than 200 µm.

6. A process of producing a porosifying, solidification-accelerating additive for binding agent building materials,
**characterised in**
**that** a high-alumina material consisting of
| | |
|---|---|
| Al₂O₃ | 50 - 90 % |
| MgO | 4 - 20 % |
| SiO₂ | 0.5 - 15 % |
| AlN | 0.1 - 5 % |
| Fe₂O₃ | 0.1 - 5 % |
| CaO | 0.1 - 5 % |
| F | 0.1 - 5 % |
| Na₂O | 0.1 - 5 % |
| K₂O | 0.1 - 2 % |
as well as in the form of metallic particles
| | |
|---|---|
| Al | 0.1 - 10 % |
| Si | 0.1 - 3 % |
| Fe | 0.1 - 3 % |
balance in total up to 5 %
| | |
|---|---|
| annealing losses | 5 - 15 % |
| moisture | 20 - 40 % |
and of mineral main constituents in the form of corumdum (α-Al₂O₃) and spinel (MgO x Al₂O₃) as well as aluminium hydroxide is crushed mechanically to a particle size of at least 90 % smaller than 500 µm,
**that** there is carried out a thermal treatment of the powder in a flue gas flow down to a residual moisture of 2 % maximum by shock drying at flue gas temperatures of 400 to 500 °C in a drying time of less than 10 seconds,
and **that** there takes place thermal activation by partially calcinating the powder within a temperature range of 400 to 1, 000 °C, wherein the holding time is calculated in such a way that there is obtained a BET surface of the activated powder of at least 10 m²/g, and wherein the metallic aluminium particles are enveloped by mineral transition modifications from aluminium hydroxide (Al₂O₃ x 3H₂) to α-aluminium oxide.

7. A process according to claim 6,
**characterised in**
**that** the porosifying powder is activated by being partially calcinated at a minimum temperature of 600 °C and a maximum temperature of 900 °C.

## Revendications

1. Additif pour liant à effet poreux et accélérant la solidification, composé de :
| | |
|---|---|
| Al₂O₃ | 50 à 90 % |
| MgO | 4 à 20 % |
| SiO₂ | 0,5 à 15 % |
| AIN | 0,1 à 5 % |
| Fe₂O₃ | 0,1 à 5 % |
| CaO | 0,1 à 5 % |
| F | 0,1 à 5 % |
| Na₂O | 0,1 à 5 % |
| K₂O | 0,1 à 2 % |
ainsi que des particules métalliques
| | |
|---|---|
| Al | 0,1 à 10 % |
| Si | 0,1 à 3 % |
| Fe | 0,1 à 3 % |
tout le reste jusqu'à 5 %
| | |
|---|---|
| pertes par calcination | 0,1 à 15 % |
et composé de : composants principaux minéraux sous la forme de corindon (α - Al₂O₃) et de spinelle (MgO x Al₂O₃),
les particules métalliques d'aluminium étant enveloppées de modification de transitions des minéraux d'hydroxyde d'aluminium (Al₂O₃ x 3 H₂O) vers l'oxyde d'aluminium α ;
la poudre étant composé d'au moins 90% de particules ayant une taille inférieure à 500 µm et la surface BET de la poudre s'élevant à au moins 10m² / g.

2. Additif pour liant à effet poreux et accélérant la solidification selon la revendication 1, **caractérisé en ce que** l'enrobage composé des modifications de transition des minéraux présente une perméabilité pour les gaz et les liquides aqueux.

3. Additif pour liant à effet poreux et accélérant la solidification selon une des revendications précédentes, **caractérisé en ce que** l'enrobage composé des modifications de transition des minéraux présente une répartition de pores entre 2 et 200 nanomètres.

4. Additif pour liant à effet poreux et accélérant la solidification selon une des revendications précédentes, **caractérisé par** une surface BET spécifique de 10 à 50 m² /g

5. Additif pour liant à effet poreux et accélérant la solidification selon une des revendications précédentes, **caractérisé par** une poudre étant composé d'au moins 90% de particules ayant une taille inférieure à 200µm.

6. Procédé pour fabriquer un additif pour liant à effet poreux et accélérant la solidification, caractérisé en que l'on fractionne un matériau réfractaire extra-alumineux composé de :
| | |
|---|---|
| Al₂O₃ | 50 à 90 % |
| MgO | 4 à 20 % |
| SiO₂ | 0,5 à 15 % |
| AIN | 0,1 à 5 % |
| Fe₂O₃ | 0,1 à 5 % |
| CaO | 0,1 à 5 % |
| F | 0,1 à 5 % |
| Na₂O | 0,1 à 5 % |
| K₂O | 0,1 à 2 % |
ainsi que des particules métalliques
| | |
|---|---|
| Al | 0,1 à 10 % |
| Si | 0,1 à 3 % |
| Fe | 0,1 à 3 % |
tout le reste jusqu'à 5 %
| | |
|---|---|
| pertes par calcination | 5 à 15 % |
| humidité | 20 à 40 % |
et composé de : composants principaux minéraux sous la forme de corindon (α - Al₂O₃) et de spinelle (MgO x Al₂O₃), ainsi que de l'hydroxyde d'aluminium fracturé étant composés d'au moins 90% de particules ayant une taille inférieure à 500 µm,
et en ce que le traitement thermique de la poudre est effectué dans un flux de gaz de fumée jusqu'à obtenir une humidité résiduelle maximale de 2% au moyen d'un séchage ultrarapide à des températures de gaz de fumée situées entre 400 et 500 °C avec un temps de séchage inférieur à 10 secondes et en ce qu'une activation thermique de la poudre est réalisée par calcination partielle dans une zone de température située entre 400 et 1000 °C ; le temps de maintien étant conçu de manière à ce qu'une surface BET de la poudre activée d'au moins 10 m²/g soit obtenue et les particules métalliques d'aluminium étant enveloppées de modifications de transitions des minéraux d'hydroxyde d'aluminium (Al₂O₃ x 3 H₂O) vers l'oxyde d'aluminium α.

7. Procédé selon la revendication 6, **caractérisé en ce que** la poudre à effet poreux est activée au moyen d'une calcination partielle à au moins 600 °C et au maximum à 900°C .
